# EUROPEAN PATENT APPLICATION

(11) **EP 1 895 417 A1**
(43) Date of publication of application: **05.03.2008**
(21) Application number: 06291319.9
(22) Date of filing: 16.08.2006
(51) Int. Cl.: G06F 11/36, H04L 12/24

(54) **Data storage system and method for testing new applications**

(71) Applicant: Alcatel Lucent, 75008 Paris (FR)
(72) Inventor: Banet, Franz-Josef, 71665 Vaihingen (DE); Lopez Aladros, Rodolfo, 70329 Stuttgart (DE); Stegers, Hans Josef, 70825 Korntal (DE)
(74) Representative: Kohler Schmid Möbus

(57) **Abstract**

A data storage system (3) comprising a plurality of databases (9.1 - 9.m+2), a plurality of database access controllers (4.1 - 4.N), and a resource manager (5) for managing such database access controllers in terms of load and data traffic in connection with database access by a number of applications (2.1 - 2.n). The proposed data storage system (3) is logically divided into an operative part (3.1) and a test environment (3.2), and said resource manager (5) is adapted to selectively separate operative traffic to said operative part (3.1) from test traffic to said test environment (3.2).

## Description

### Background of the invention

The present invention relates to a data storage system comprising a plurality of databases, a plurality of database access controllers, and a resource manager for managing said database access controllers in terms of load and data traffic in connection with database access by a number of applications.

The present invention also relates to method for testing new applications, in particular applications involving a new data model, in connection with a data storage system providing database access for a number of applications.

Furthermore, the present invention relates to a resource managing module for use in a data storage system, a computer program product for use on a data processing device in a data storage system, and to a use of the proposed data storage system.

In contrast to conventional database systems, an Intelligent Storage System (ISS) maintains data, e.g. user profile data for use in telecommunications systems, in a centralised fashion for access by arbitrary applications. As known to a person skilled in the art, major components of the ISS architecture are a plurality of database access controllers or access computers, a plurality of databases (e.g., user profile databases), and a localisation database, which comprises references to physical storage locations within the (distributed) database. An ISS comprises an internal data model which represents the data structure of the ISS database. In the context of the present example, said internal data model summarises the user profiles of all attached applications. In this way, the ISS concept provides an internal database for a variety of applications.

New applications or modified applications can be introduced easily and in a flexible way, because the data are already comprised in the centralised database and can be made accessible to the ISS architecture. In this context, an ISS database comprises all the necessary data access mechanisms.

However, any implementation of new applications, which may involve a change of data models, represents a potential risk of interfering with an existing and presumably ongoing operation of the ISS.

### Object of the invention

It is the object of the present invention to provide a data storage system and a method of operating a data storage system which enable implementation of new/modified applications without impairing a current operation of said data storage system.

### Summary of the invention

According to a first aspect of the present invention the object is achieved by providing a data storage system of the above-defined type, wherein the storage system is logically divided into an operative part and a test environment, and in that said resource manager is adapted to selectively separate operative traffic to said operative part from test traffic to said test environment.

According to a second aspect of the present invention, the object is achieved by providing a method of the above-defined type, said method comprising the steps of:
- selectively routing an access request from a new application to a dedicated test environment of the data storage system,
- selectively routing an access request from a known application to a dedicated operative part of the data storage system, and
- providing a test result in connection with a performance of said test environment with respect to said routed access request from the new application.

According to a third aspect of the present invention the object is achieved by providing a resource managing module for use in a data storage system, in particular the data storage system according to said first aspect of the present invention, wherein said resource managing module is configured to function as the resource manager according to said first aspect of the present invention.

According to a fourth aspect of the present invention the object is achieved by providing a computer program product of the above-defined type, in particular for use in a data storage system according to said first aspect of the present invention, for testing new applications, in particular applications involving a new data model, in connection with a data storage system providing database access for a number of applications, wherein said computer program product comprises program code sequences operable to:
- selectively route an access request from a new application to a dedicated test environment of the data storage system,
- selectively route an access request from a known application to a dedicated operative part of the data storage system, and
- provide a test result in connection with a performance of said test environment with respect to said routed access request from the new application.

According to a fifth aspect of the present invention the object is achieved by providing a computer program product for use on a data processing device in a data storage system, in particular the data storage system according to anyone of claims 1 to 16, for testing new applications, in particular applications involving a new data model, in connection with a data storage system providing database access for a number of applications, wherein said computer program product comprises program code sequences operable to implement on said data processing device a resource manager as comprised in the data storage system according to the first aspect of the present invention.

Thus, in accordance with a general idea underlying the present invention, the proposed data storage system comprises a test environment, so that any modifications can be implemented and verified in said test environment, which is logically separated from an operative part of the system in order to avoid operation impairments. Therefore, said test environment is part of a common network together with the operative part or operative environment. However, it is logically separated from operative traffic.

In this way, maintenance of existing applications and implementation of new services alongside corresponding modifications of data models, respectively, do not present any risk for a current operation of the proposed data storage system.

As already stated above, any risk for operative services in the context of integration testing can be circumvented in the context of the present invention, if the totality of integration tests is performed within said test environment.

In the present context, the term "integration test" refers to a scenario of providing database access to a new/modified application involving use of a new external and/or internal data model, wherein the term "external" refers to the application and the term "internal" refers to the database, respectively, in order to determine compatibility of said new/modified application and said database for future operative usage.

In an embodiment of the data storage system in accordance with the present invention at least one of said plurality of databases and at least one of said plurality of database access controllers belong to said test environment. In this way, said at least one database and said at least one database access controller provide testing platforms for modified internal data models and modified external data models, respectively, without interfering with operative traffic.

In a further embodiment of the data storage system in accordance with the present invention said resource manager, said database access controllers and said databases are connected via an IP-/data-based network.

In yet another embodiment of the data storage system in accordance with the present invention at least one of said plurality of databases is a localisation database, wherein the localisation database belongs to both the operative part and the test environment.

In this way, the localisation database can be used by both the operative part and the test environment. Typically, the localisation database will comprise references (pointers) to physical storage locations of the distributed database, so that said common usage of the localisation database by both the operative part and the test environment does not entail any risk in connection with database operation.

In other words: a suitable configuration of said localisation database ensures a complete separation of the operative system part on the test environment on database level. In a corresponding embodiment of the data storage system in accordance with the present invention the localisation database is adapted for associating said at least one database access controller belonging to the test environment with said at least one database belonging to the test environment.

In yet another embodiment of the data storage system in accordance with the present invention said resource manager is adapted to separate operative traffic from test traffic based on at least one of an identifier of a data model under test, an identifier of the application under the test, and an identifier of an application version under test. Typically, said identifier is provided to the resource manager in connection with a connection request by a given application, e.g., an application under test.

In particular in the context of a telecommunications system, in further embodiments of the data storage system in accordance with the present invention a number of said plurality of database access controllers are real-time capable for interacting with real-time applications. Additionally or alternatively, a number of said plurality of database access controllers may be non-real-time capable for interacting with non-real-time applications.

In order to be able to keep away operative traffic from said test environment, i.e., to separate operative traffic and test traffic, the resource manager is adapted to associate a specific operation mode with each one of said plurality of database access controllers, wherein said mode is one of a first mode for indicating that a respective database access controller is part of said operative part, a second mode for indicating that a respective database access controller is part of said test environment, and a third mode for indicating a load test with operational traffic, wherein the resource manager is further adapted to route test and/or operative traffic to said database access controllers in accordance with said associated operation mode.

In accordance with further embodiments of the present invention said first mode can be identified with a load sharing mode, said second mode can be identified with an integration test mode, and said third mode can be identified with a mode test under operational traffic, as will be explained in detail below.

In yet another embodiment of the data storage system in accordance with the present invention the resource manager is adapted to receive status information from each one of said database access controllers, said status information particularly comprising a number of connections with a given database access controller and/or a low status of the database access controller.

In this way, the resource manager is continuously being informed on the current situation of said database access controllers for performing efficient load sharing. Additionally or alternatively, the resource manager may be adapted to acquire such status information by polling individual database access controllers.

In a further embodiment of the data storage system in accordance with the present invention a new database access controller, a database access controller unknown to the resource manager, and/or a currently unused database access controller is associated with an idle state, from which said database access controller can be associated with anyone of said operation modes. Said idle state thus allows the flexible utilisation of the associated database access controller or resource.

In yet another embodiment of the data storage system in accordance with the present invention the resource manager is adapted to restrict transitions between said operation modes, in particular by means of an obligatory intermediate state. In this way, the resource manager is enabled to prevent "forbidden" transitions, e.g., transition from a load sharing mode to an integration test mode before the corresponding access computer has been suitably configured. Furthermore, said feature may prevent routing operative traffic to the test environment.

In particular after a successful integration test of a new application, in another embodiment of the data storage system in accordance with the present invention the resource manager is adapted to mix operative and test traffic in said second and third operation modes.

As already stated above, at least one of said plurality of databases in the data storage system in accordance with the present invention may comprise user profile data, in particular for use by telecommunications applications. In this context, a preferred use of the data storage system according to said first aspect of the present invention comprises an operative connection of the data storage system with a telecommunications system.

For externally controlling said traffic separation, in yet another embodiment of the data storage system in accordance with the present invention said resource manager is operatively connected with an operation control entity, e.g., an Operations-and-Maintenance (OAM) centre of the telecommunications system.

According to embodiments of the present invention, attachment of applications is achieved in a flexible way, i.e., no predefined network configurations are setup, if possible.

In accordance with further embodiments of the present invention said resource manager provides a central instance, which controls database access controllers in a so-called load sharing group for uniformly distributing a load on a plurality of database access controllers for accessing the ISS.

Further embodiments of the present invention allow performing integration tests with operative test participants (i.e., known/tested applications) with respect to a given service and/or a given load.

Further advantages and characteristics of the present invention can be gathered from the following description of preferred embodiments given by way of example only with reference to the enclosed drawings. Features mentioned above as well as below can be used in accordance with the present invention either individually or in conjunction. The described embodiments are not to be regarded as an exhaustive enumeration but rather as examples with respect to a general concept underlying the present invention.

### Brief description of the drawings

- Fig. 1: is a schematic diagram for illustrating database access via an IP-/data-based network in accordance with an embodiment of the present invention;
- Fig. 2: is a detailed structural diagram of an embodiment of the data storage system in accordance with the present invention;
- Fig. 3: is a schematic block diagram for illustrating function and operation of an embodiment of the resource managing module in accordance with the present invention; and
- Fig. 4: is a state diagram for illustrating different states of storage system resources in accordance with an embodiment of the present invention.

### Detailed description

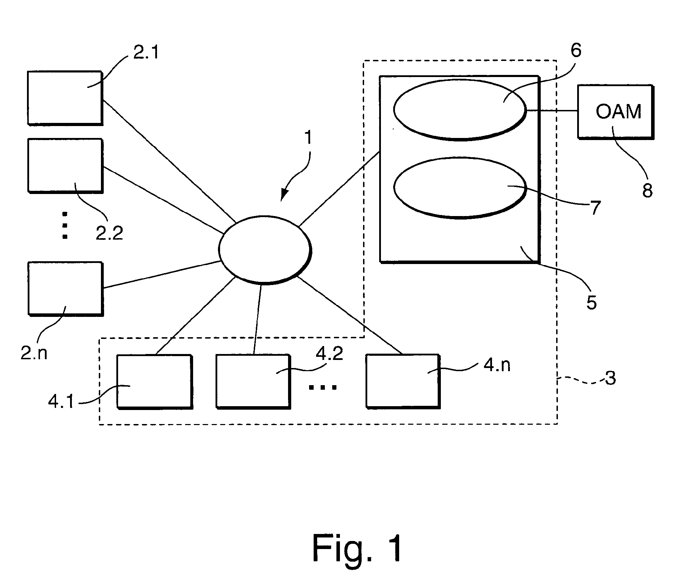

**Fig. 1** shows a schematic diagram for illustrating database access via an IP-/data-based network **1** in accordance with an embodiment of the present invention. As depicted in Fig. 1, an IP-/data-based network 1 operatively connects a plurality of applications **2.1, 2.2,** ... **2.n** with a data storage system **3** (Intelligent Storage System - ISS) comprising a number of resources **4.1, 4.2,** ... **4.N** and a resource/load-manager or resource manager **5.** Resource/load manager 5 further comprises a resource operation control module 6 and a resource/load management module **7**. Said resource operation control module 6 is operatively connected with an Operations-and-Maintenance (OAM) centre or operation control entity **8**.

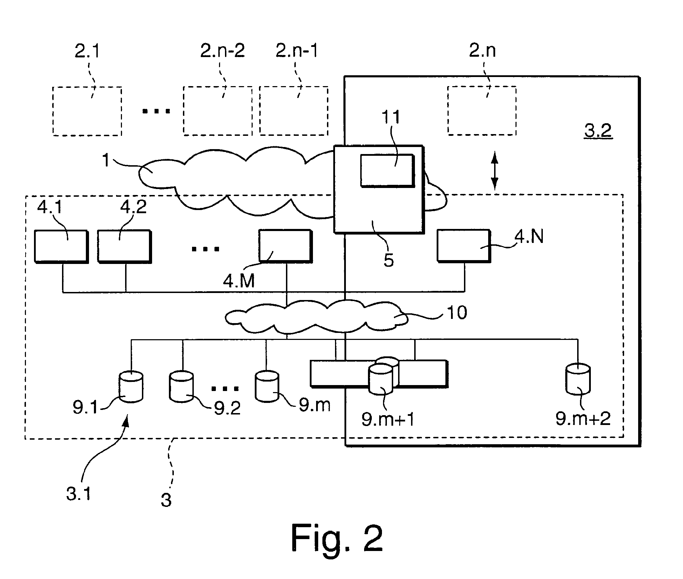

As will become apparent further down in connection with appended Fig. 2, resources 4.1 - 4.N may take the form of database access controllers (access computers) which are operatively connected with a plurality of data storage means in the form of databases (not shown in Fig. 1).

Applications 2.1 - 2.n each specify a respective external data model to access data stored in said data storage system 3 via the IP-/data-based network 1 and via one or several of said resources 4.1 - 4.N under control of resource/load manager 5. External control of said resource/load manager 5 and/or said data access is provided by means of OAM 8 via resource/load management module 7.

In this way, as will be appreciated by a person skilled in the art, data storage system 3 of Fig. 1 generally is devised as an Intelligent Storage System (ISS) and is based on a consolidated storage concept involving a Storage Area Network (SAN) as opposed to, e.g., Direct Attached Storage (DAS).

The above-described embodiment of the present invention comprises a plurality of components, i.e., applications 2.1 - 2.n, resource/load manager 5, and resources (i.e., database access computers) 4.1 - 4.N, which are arranged in distributed fashion, e.g., over an IP/data-based network. In the particular case of using the Internet as IP/data-based network, resource/load manager 5 may route request from world-wide distributed applications to resources which may also be distributed in world-wide fashion.

**Fig. 2** shows a detailed structural diagram of an embodiment of the data storage system in accordance with the present invention. The same reference numerals are used for similar or identical elements with respect to the above description of Fig. 1.

Fig. 2 provides additional information as to the internal structure of ISS 3. ISS 3 comprises a number of resources 4.1, 4.2, ..., 4.N in the form of database access controllers (DBA). In the embodiment of Fig. 2, database access controllers 4.1, 4.2 are devised as real-time database access controllers (RT-DBA), and database access controller 4.N is devised as a non-real-time database access controller (NRT-DBA). Database access controller 4.N, which may be an NRT-DBA or an NRT-DBA will also be referred to as Test-DBA, as will be explained in detail later.

Database access controllers 4.1 - 4.N are connected with a plurality of databases **9.1 - 9.m+2** via Local Area Network (LAN) **10**. In this way, ISS 3 effectively functions as a Storage Area Network (SAN), as already stated above.

In the present example, databases 9.1 - 9.m are devised as profile databases for storing complete user information (user profiles) for users in a telecommunications system, e.g., a mobile communications system. However, as will be appreciated by a person skilled in the art, embodiments of the present invention are not limited to use within said telecommunications systems but can be employed whenever applications access data over an IP-/data-based network, as previously described with reference to appended Fig. 1.

Furthermore, in the present example, database **9.m+1** is devised as localisation database, which comprises references to physical storage locations on databases 9.1 - 9.m, 9.m+2 in order to enable access to specific data entries, as known to a person skilled in the art.

As will be explained in detail further below, database 9.m+2 is devised as a test database.

Generally, in accordance with embodiments of the present invention, ISS 3 comprises an operative part or environment **3.1** and a test environment **3.2**. While database access controllers 4.1 - 4.N and databases 9.1 - 9.m belong to said operative part 3.1 of ISS 3, said test database access controller 4.N and said test database 9.m+2 belong to set test environment 3.2 of ISS 3. As can further be gathered from Fig. 2, said localisation database 9.m+1 belongs to both operative part 3.1 and test environment 3.2 of ISS 3.

Applications 2.1 - 2.n access ISS 3 via Wide Area Network (WAN)/LAN which corresponds to the IP-/data-based network 1 of Fig. 1. Access to ISS 3 can be both wired and/or wireless. As known to a person skilled in the art, network 1 is associated with a DNS (Domain Name Server) resource manager **11** which is comprised in resource/load manager 5 (cf. Fig. 1) for translating a request by a given application 2.1 - 2.n for a desired resource (database access controller 4.1 - 4.N) into a network address. This may also be referred to as address resolution. In this context, said request may comprise a reference to a domain and/or an URL (Uniform Resource Locator). In other words: resolution of resource addresses is achieved in analogy to standard DNS methodology, i.e., a logical address (e.g., an URL) is resolved to obtain a physical address.

Note that ISS 3 can comprise any number of real-time, non-real-time, and test database access controllers as well as any number of (profile) databases, localisation databases, and test databases with the operative part 3.1 and/or the test environment 3.2; it is by no means limited to the actual numbers given above with reference to appended Fig. 2.

As can further be gathered from the embodiment of Fig. 2, at least one application 2.1 is a real-time application, i.e., an application which requires real-time access to data comprised in databases 9.1 - 9.m+2 of ISS 3. Furthermore, in the example of Fig. 2, applications **2.n-2, 2.n-1** are devised as non-real-time applications, e.g., in the form of an OSS/BSS (Operational Support Service; Business Support Service) and/or in the form of a self-service/provisioning application, respectively, as known to a person skilled in the art. In this way, applications 2.n-2, 2.n-1 can be regarded as applications which do not require real-time access to data stored in ISS 3.

Application 2.n, e.g., a real-time application (without limitation), is a new and/or modified application, i.e., an application which in its current configuration, e.g., with respect to its (external) data model, is unknown to resource/load manager 5.

For testing and/or integration purposes, access of said new/modified application 2.n to ISS 3 is provided exclusively within test environment 3.2 of ISS 3. In this way, ISS 3 can be regarded as logically separated into two distinct parts, i.e., said operative part 3.1 and said test environment 3.2. Thus, new/modified applications, e.g. application 2.n, which generally involve a respective new/modified data model (external data model) can be tested under real operational conditions without interfering with operational data traffic in connection with known/tested applications 2.1 - 2.n-1.

Within test environments 3.2, said test database access controller 4.N provides a testing platform for new and/or modified external data models, while said test database 9.m+2 provides a testing platform for modifications of the internal ISS data model. In this way, test database access controller 4.N performs a mapping of said external data models on said internal data model.

In accordance with embodiments of the present invention, a rooting concept has been developed in order to provide resource/load manager 5 with information which is required for to decide whether or not a given request is to be routed to the operative part 3.1 of ISS 3 in order to perform conventional load sharing involving database access controllers 4.1 - 4.N, or if a given request stems from an application under test, e.g., application 2.n, and is to be routed to test environment 3.2, i.e. test database access controller 4.N and test database 9.m+2.

That is, in the present embodiment the resource/load manager 5 separates operative traffic from test traffic and routes any operative traffic to said operative part 3.1 of ISS 3 where it is - preferably - shared among a plurality of corresponding database access controllers 4.1 - 4.N. On the other hand, traffic related to applications under test is routed to at least one corresponding database access controller 4.N within the test environment 3.2.

As already stated above with reference to appended Fig. 1, resource/load manager 5 receives any information required to put a given resource into a predefined mode (cf. below) from OAM 8. As will be explained in more detail further below, said mode particularly comprises a load sharing mode (i.e., said given resource belonging to the operative part 3.1 of ISS 3) and an integration test mode, wherein said given resource belongs to test environment 3.2. Said information required by resource/load manager 5 comprise the resource as such as well as the desired mode. Furthermore, they comprise indications required for managing said resource, e.g., current load, current number of established connections, target load, etc. In addition, external data models to be tested are also notified to resource/load manager 5, such that requests from the part of an application can be routed to the corresponding resource.

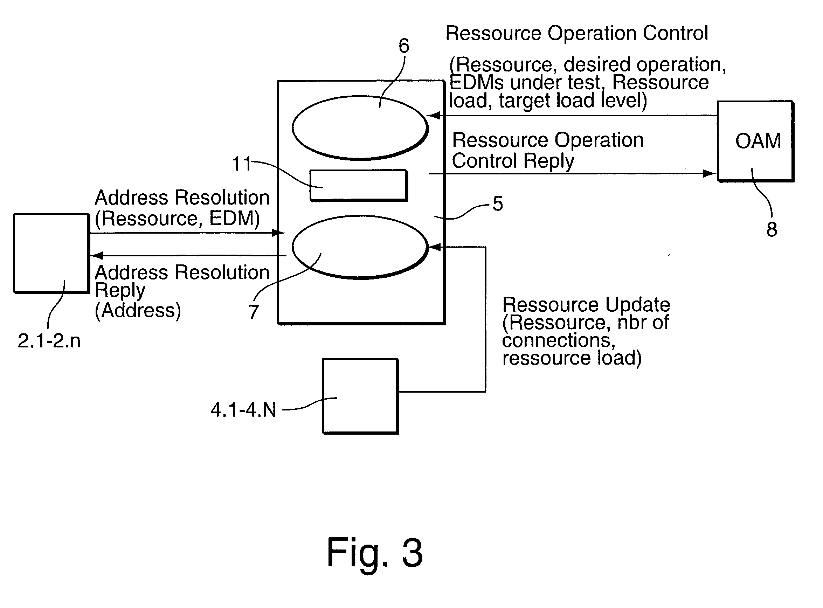

**Fig. 3** shows a schematic block diagram for illustrating function and operation of an embodiment of the resource managing module in accordance with the present invention. In Fig. 3, same reference numerals as in previously described Figs. 1 and 2 are used to denote the same or similar elements.

From an application 2.1 - 2.n, resource/load manager 5 receives requests for a particular resource 4.1 - 4.N, which are resolved to yield a network target address, as previously described (arrow "Address Resolution" in Fig. 3). Together with said request, applications 2.1 - 2.n specify the required resource and its external data model (EDM).

For instance, if an application wants to connect with the ISS 3 (Fig. 2) to access data, it must be assigned a corresponding database access controller (access computer). This is done dynamically by means of DNS resource manager 11, so that no fixed network addresses are pre-configured. In this context, resource/load manager 5 receives a request which comprises the desired resource 4.1 - 4.N. This aspect has already been explained in detail above with reference to appended Fig. 2.

In the context of the present invention, resource/load manager 5 has a variety of possibilities to control such requests. First of all, it requires knowledge as to which mode a requested resource is to be operated in. Two of said operation modes for resources have already been mentioned above. Another operation mode (third operation mode) will be explained in detail farther down.

Furthermore, resource/load manager 5 requires an indicator or identifier for traffic control and corresponding values associated with said resource. In the present exemplary embodiment, this could be a list of external data models under test. As indicated in Fig. 3, resource/load manager 5 obtains corresponding information from OAM 8 via resource operation control 6 as indicated by means of arrow "Resource Operation Control". It can further be gathered from Fig. 3, said information provided by OAM 8 may also comprise information in connection with resource load, target load level, or the like.

From an application 2.1 - 2.n, resource/load manager 5 receives an indicator together with a connection request, for instance the required external data model (EDM). The received indicator is then compared with said list of associated identifiers. If there is a match, the requesting application obtains the address of the corresponding resource, in the present example an IP-address of the test database access controller 4.N (Fig. 2) in case said request stems from an application under test, e.g. application 2.n of Fig. 2. If there is no match, the requesting application belongs to the operative part 3.1 of ISS 3, also referred to as operative group.

As will be appreciated by a person skilled in the art, traffic control can also be realised with other identifiers or indicators than mentioned above, e.g. application indicators or version indicators.

In the present example of a ISS database, resource/load manager 5 maintains three different states for a given database access controller, i.e. Load Sharing, Load Test with operational traffic, and Integration Test, as already stated above.

If the database environment is stable/static, i.e. no modifications are being effected, an operational status of all of said system resources 4.1 - 4.N (i.e., database access controllers) corresponds to said load sharing mode. In such an environment, there are no test applications or test participants and no test environment 3.2 (Fig. 2). Thus there is no traffic separation, and the entire data traffic is selectively routed to said operative part 3.1. Connection requests from the applications 2.1 - 2.n are shared uniformly between the resources 4.1 - 4.N. In this mode, the resource/load manager 5 comprises a suitable algorithm (not shown) for uniform load sharing.

For testing new applications or versions, e.g. application 2.n in Fig. 2, which involve modifications of the external and/or internal data model, the resource/load manager 5 sets specific resources into the integration test state. In this operational mode said resource belongs to test environment 3.2. In the context of a connection request, the resource/load manager 5 evaluates said information on EDMs to route the traffic from corresponding test participants to the test environment 3.2. Subsequently, resource/load manager 5 determines a test result in connection with a performance of said test environment with respect to said routed access request from the new application, e.g., to determine if there has been any faulty behaviour with respect to database access by that application and/or if the external and internal data models involved are compatible. Said test result may be notified to OAM 8.

Said third operational mode, i.e., a load test with operational traffic, allows verification if an operative resource, i.e., a resource 4.1 -4.N from said operative group, can cope with a predefined load without any faulty behaviour. In this context, the resource/load manager 5 can choose a suitable algorithm which allows for increasing traffic successively and in controlled fashion. In contrast to normal load sharing operation, this involves routing as many requests to a corresponding access computer, until a maximum tolerable load limit is reached.

In the case of said third mode, too, resource/load manager 5 determines a test result in connection with a performance of the application(s) under test, e.g., to determine if there has been any faulty behaviour under increasing load and/or if a predefined target load level has been reached. Said test result may also be notified to OAM 8.

Resource/load manager 5 has a variety of possibilities to control load conditions. Generally, resource/load manager 5 evaluates a current load situation together with a current number of established connections and the target load of a given resource.

In order to stay informed with respect to the actual utilisation of a given resource, the resource/load manager 5 comprises feedback paths in operative connection with a given resource. Upon connecting or disconnecting said resource or upon a load change, corresponding information is transmitted to the resource/load manager 5 from side resource (as indicated by means of arrow "Resource Update" in Fig. 3), so that resource/load manager 5 stays informed with respect to the current resource status.

Alternatively or additionally, the resource/load manager 5 may request any information required for load control from every single resource 4.1 - 4.N, e.g., through a polling mechanism.

As can further be gathered from the illustration of Fig. 3, the resource/load manager 5 replies to a request by a given application with an "Address Resolution Reply" comprising said network address, and to received "Resource Operation Control" information with a corresponding "Resource Operation Control Reply".

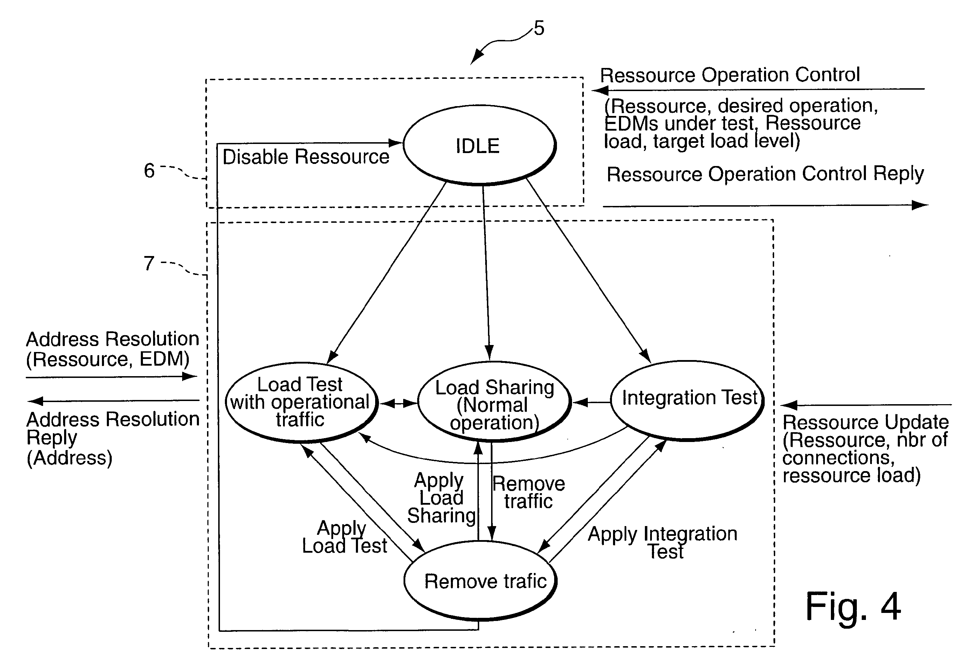

**Fig. 4** shows a state diagram for illustrating different states of storage system resources in accordance with an embodiment of the present invention. The same reference numerals as in previously described Figs. 1 to 3 have been used to denote the same or similar elements. Fig. 4 shows the above-described modes (i.e., load sharing, load test with operational traffic, and integration test) in exemplary fashion in a state diagram.

If a resource or database access controller (e.g., resources 4.1 - 4.N in Figs. 1 to 3) is not yet known to the resource/load manager 5 or has been de-assigned, the corresponding process is an IDLE state. For this state, a resource may change into anyone of said three operational states, i.e., load sharing, load test with operational traffic, and integration test.

Note that according to the embodiment of Fig. 5, arbitrary state or status changes are not allowed. For instance, a database access controller cannot perform a transition from a load sharing state to integration test directly. In this way, it can be ensured that a corresponding access computer has been configured accordingly prior to said status change, and that no operative traffic is routed to the test environment.

A fifth state, Remove traffic, represents an intermediate state, which is provided to stop traffic on a given resource in order to be able to effect modifications and/or provide a defined state transition.

As will be appreciated by a person skilled in the art, said load sharing mode and said load test mode with operational traffic allow mixing operative traffic with test participants - provided that database access controllers have been configured accordingly to handle this type of mixed traffic.

The above-described mixed traffic scenario may be useful if a test database access controller, e.g. access controller 4.N in Fig. 2, is included into a load sharing group after a successful integration test, whereas the access computers of said load sharing group do not yet have a similar software and configuration status. To achieve this, the resource/load manager must evaluate an identifier comprised in an individual connection request, as stated above.

Further suitable status changes for an exemplary ISS application can be gathered from Fig. 4. In particular, a direct state transition can be effected from said remove traffic state to said idle state (indicated by means of arrow "Disable Resource" in Fig. 4).

As will be appreciated by a person skilled in the art, functionality of resource manager 5 may be devised in software form, in hardware form, or in a mixed hardware/software form. For instance, resource manager 5 may be implemented on a multi-purpose computer by means of providing and executing suitable program code sequences in any known computer language, e.g. C/C++, Java, or the like. Said code sequences may constitute a computer program product stored on a conventional computer-readable data carrier or may be provided in the form of a computer network data signal. Alternatively, functionality of resource manager 5 may at least partially be implemented by means Filed Programmable Gate Arrays (FPGAs).

In this way, the present invention enables integration testing of new/modified applications in an operational context without interfering with normal operative traffic.

Furthermore, as will be appreciated by a person skilled in the art, embodiments of the present invention enable distributed (world-wide) traffic and/or load management in combination with logical address resolution, as described above with reference to the enclosed drawings. Thus, the present invention provides a novel way of distributed database access.

## Claims

1. A data storage system (3) comprising a plurality of databases (9.1 - 9.m+2), a plurality of database access controllers (4.1 - 4.N), and a resource manager (5) for managing said database access controllers in terms of load and data traffic in connection with database access by a number of applications (2.1 - 2.n), **characterised in that** the storage system is logically divided into an operative part (3.1) and a test environment (3.2), and **in that** said resource manager (5) is adapted to selectively separate operative traffic to said operative part (3.1) from test traffic to said test environment (3.2).

2. The data storage system (3) of claim 1, **characterised in that** at least one of said plurality of databases (9.1 - 9.m+2) and at least one of said plurality of database access controllers (4.1 - 4.N) belong to said test environment (3.2).

3. The data storage system (3) of claim 1, **characterised in that** said resource manager (5), database access controllers (4.1 - 4.N) and said databases (9.1 - 9.m+2) are connected via a network, in particular an IP-/data-based network (1).

4. The data storage system (3) of claim 1, **characterised in that** at least one of said plurality of databases (9.1 - 9.m+2) is a localisation database (9.m+1), wherein the localisation database belongs to both the operative part (3.1) and the test environment (3.2).

5. The data storage system (3) of claim 4, **characterised in that** the localisation database (9.m+1) is adapted for associating said at least one database access controller (4.N) belonging to the test environment (3.2) with said at least one database (9.m+2) belonging to the test environment (3.2).

6. The data storage system (3) of claim 1, **characterised in that** the resource manager (5) is adapted to associate a specific operation mode with each one of said plurality of database access controllers (4.1 -4.N), wherein said mode is one of a first mode for indicating that a respective database access controller is part of said operative part (3.1), a second mode for indicating that a respective database access controller is part of said test environment (3.2), and a third mode for indicating a load test with operational traffic, wherein the resource manager (5) is further adapted to route test and/or operative traffic to said database access controllers (4.1 -4.N) in accordance with said associated operation mode.

7. The data storage system (3) of claim 1, **characterised in that** at least one of said plurality of databases (9.1 - 9.m+2) is a profile database comprising using user profile data, in particular for use by telecommunication applications (2.1 - 2.n).

8. Use of the data storage system (3) according to anyone of claims 1 to 7 in operative connection with a telecommunication system, wherein said applications (2.1 - 2.n) belong to said telecommunication system.

9. A method for testing new applications (2.n), in particular applications involving a new data model, in connection with a data storage system (3) providing database access for a number of applications (2.1 - 2.n), **characterised by** the steps of:
- selectively routing an access request from a new application (2.n) to a dedicated test environment (3.2) of the data storage system (3),
- selectively routing an access request from a known application (2.1 - 2.n-1) to a dedicated operative part (2.1) of the data storage system (3), and
- providing a test result in connection with a performance of said test environment with respect to said routed access request from the new application (2.n).

10. A resource managing module (5) for use in a data storage system (3), in particular the data storage system according to anyone of claims 1 to 7, **characterised in that** said resource managing module (5) is configured to function as the resource manager according to anyone of claims 1 to 7.

11. A computer program product for using on a data processing device in a data storage system (3), in particular the data storage system according to anyone of claims 1 to 7, for testing new applications (2.n), in particular applications involving a new data model, in connection with a data storage system (3) providing database access for a number of applications (2.1 - 2.n), **characterised in that** by program code sequences operable to:
- selectively route an access request by said new application (2.n) to a dedicated test environment (3.2) of the data storage system (3),
- selectively route an access request by a known application (2.1 - 2.n-1) to a dedicated operative part (2.1) of the data storage system (3), and
- provide a test result in connection with a performance of said test environment with respect to said routed access request by the new application (2.n).

12. A computer program product for use on a data processing device in a data storage system (3), in particular the data storage system according to anyone of claims 1 to 7, for testing new applications (2.n), in particular applications involving a new data model, in connection with a data storage system (3) providing database access for a number of applications (2.1 - 2.n), **characterised in that** by program code sequences operable to implement on said data processing device a resource manager (5) is comprised in anyone of claims 1 to 7.
